# FASCICULE DE BREVET EUROPEEN

(11) **EP 1 070 945 B1**
(45) Date de publication et mention de la délivrance du brevet: **31.03.2004**
(21) Numéro de dépôt: 00114986.3
(22) Date de dépôt: 20.07.2000
(51) Int. Cl.: G01L 1/22, G01L 1/26, G01G 3/12

(54) **Capteur d'effort comportant un dispositif de protection contre les surcharges**
Kraftsensor mit Überlastungsschutz
Force sensor with overload protection

(30) Priorité: 23.07.1999 FR 9909695
(43) Date de publication de la demande: 24.01.2001
(73) Titulaire: SIDEL, 76930 Octeville-sur-Mer (FR)
(72) Inventeur: Sabiron, Gérard, 76053 Le Havre Cedex (FR)

(56) Documents cités:
- EP-A- 0 076 616

## Description

L'invention concerne un capteur d'effort à moment constant, du type constitué d'un quadrilatère déformable dans lequel deux montants opposés sont reliés par deux traverses sensiblement parallèles, et du type dans lequel, sous l'effet d'un effort appliqué sur un montant, dans le plan du capteur et selon une direction sensiblement perpendiculaire aux traverses, les deux montants se déplacent l'un par rapport à l'autre sensiblement selon la direction de l'effort du fait de la déformation des zones de jonction des traverses avec les montants.

En mesurant la déformation des zones de jonction, par exemple à l'aide de jauges de déformation, on peut déduire la valeur de l'effort appliqué au montant.

Un tel capteur est souvent utilisé pour effectuer des mesures de poids. Dans ce cas, on utilise de préférence des capteurs dont le quadrilatère forme un parallélogramme, les deux montants étant alors disposés verticalement et les deux traverses s'étendant, au moins au repos, selon la direction horizontale. L'un des montants est alors fixé à un bâti tandis que l'autre montant sert d'interface avec des moyens pour supporter la charge à peser.

Dans un tel type de capteur, il est préférable de prévoir des systèmes de protection qui limitent la déformation du capteur si une charge trop importante lui est appliquée, ceci en évitant notamment une trop grande flexion des zones de jonction.

On connaît de tels systèmes dans lesquels il est prévu que le montant d'interface du capteur vient en butée contre une surface d'appui liée au bâti en cas de trop forte sollicitation. Dans ce cas, une bonne maîtrise des déformations acceptables du capteur peut être rendue difficile du fait des tolérances dimensionnelles de construction. Aussi, il est bien souvent nécessaire de prévoir des moyens de butée réglables et de faire un réglage une fois le capteur en place sur le bâti. Or, certaines machines telles que des remplisseuses pondérales sont munies de plusieurs dizaines de capteurs. Dans ce cas, un réglage a posteriori, après le montage des capteurs sur la machine, est trop long. De plus, on peut alors rencontrer des problèmes d'accessibilité compte tenu du fait que le capteur est souvent destiné à être enfermé dans un compartiment étanche pour être bien protégé.

EP-A2-76 616 montre un système avec un doigt et un trou.

L'invention a pour but de proposer un capteur de mesure d'effort qui soit équipé d'un système simple et fiable de protection contre les surcharges.

Dans ce but, l'invention propose un capteur du type décrit précédemment, caractérisé en ce que chaque montant porte un doigt de butée qui est rapporté sur une face latérale du capteur et qui s'étend selon la direction transversale des montants en direction de l'autre montant de telle sorte que les extrémités libres des deux doigts s'étendent en vis-à-vis l'une de l'autre, et en ce que les doigts comportent des faces de butée respectives qui viennent en appui l'une contre l'autre lorsque le capteur est déformé d'une valeur prédéterminée dans un sens ou dans l'autre sous l'application d'un effort excessif.

Selon d'autres caractéristiques de l'invention :
- l'écartement de deux faces de butée associées des deux doigts est réglable ;
- un premier des doigts porte une tige filetée qui est sensiblement parallèle à la direction de déplacement relatif des deux montants et qui est pourvue d'au moins deux écrous prévus pour coopérer respectivement avec deux faces de butées opposées du second doigt ;
- la tige filetée coulisse librement au travers d'un alésage formé dans le second doigt, et les deux écrous sont disposés de part et d'autre du second doigt ;
- un doigt de butée est formé par l'une des branches d'une équerre dont la seconde branche est fixée sur une face latérale du montant correspondant ;
- les équerres sont fixées sur les montants par des vis agencées perpendiculairement au plan du capteur.

D'autres caractéristiques et avantages de l'invention apparaîtront à la lecture de la description détaillée qui suit ainsi que dans les dessins annexés dans lesquels :
- la figure 1 est une vue en perspective éclatée d'un capteur selon l'invention ; et
- les figures 2 à 4 sont des vues latérales du capteur qui est illustré respectivement en position de repos et dans ses deux positions de butée basse et haute.

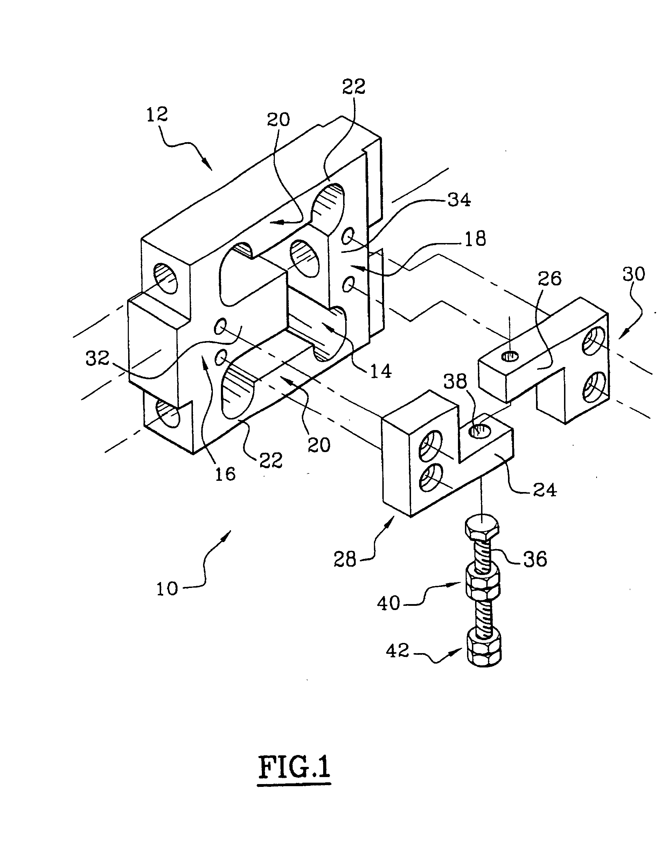

On a illustré sur la figure 1 un capteur d'effort 10 du type appelé « à moment constant ».

Un tel capteur est par exemple utilisé dans le cadre d'un dispositif de pesage, mais il pourra aussi être utilisé dans d'autres applications. Toutefois, la suite de la description se fera plus particulièrement en considérant l'application du capteur 10 au pesage d'objets.

Ce capteur présente un corps métallique 12 sensiblement en forme de plaque et pourvu d'un évidement central 14. Cet évidement 14 délimite, dans le corps 12, quatre côtés parmi lesquels on distinguera un montant de base 16, destiné à assurer la fixation du capteur sur un bâti fixe, et un montant d'interface 18 destiné à être relié à un dispositif de support de l'objet à peser.

Dans le cadre de la mesure de poids, les deux montants 16, 18 seront de préférence orientés sensiblement verticalement. Les deux autres côtés délimités par l'évidement 14 forment des traverses 20 sensiblement horizontales qui relient les deux montants. La forme de l'évidement 14 est telle que les zones de jonction 22 entre les traverses 20 et les montants 16, 18 sont amincies et sont donc particulièrement déformables par rapport aux autres côtés dont on peut considérer, par comparaison, qu'ils sont indéformables.

Le corps 12 du capteur forme ainsi un quadrilatère susceptible de se déformer à la manière d'un parallélogramme lorsqu'une charge est appliquée par exemple sur le montant d'interface 18.

De préférence, le corps 12 du capteur est agencé dans un plan vertical, et, la charge appliquée étant un poids, le capteur ne se déforme que dans son plan. Dans un tel capteur, on peut placer des jauges de déformation sur les zones amincies 22 formant articulation de manière à pouvoir déduire, en fonction de leur déformation, l'intensité de l'effort appliqué sur le capteur, en l'occurrence le poids de l'objet à peser.

Bien entendu, pour que le capteur reste en état de fonctionner, il faut que les déformations subies par les zones de jonction 22 restent dans le domaine élastique du matériau du corps 12, ce qui implique que le déplacement relatif des deux montants 16,18 ne dépasse pas une limite prédéfinie. Cela signifie que la charge appliquée sur le capteur ne doit pas dépasser un niveau de seuil. Cependant, en fonctionnement, il peut se produire des manoeuvres accidentelles au cours desquelles ce niveau de seuil est dépassé. Il faut donc prévoir un système permettant de limiter la déformation du capteur sous un effort excessif.

A cet effet, le capteur selon l'invention est pourvu de deux doigts de butée 24, 26, qui s'étendent horizontalement chacun depuis un des montants 16, 18. Les doigts 24, 26 sont de section rectangulaire et chacun d'eux forme une branche d'une équerre 28, 30 qui est fixée sur une face latérale 32, 34 du montant 16, 18 correspondant. Bien entendu, les équerres sont fixées sur un même côté du capteur 10. On peut voir que chaque équerre est destinée à être fixée de manière simple par deux vis perpendiculaires au plan du capteur, ce qui est un gage d'accessibilité et de facilité de montage.

Les deux doigts 24, 26 s'étendent donc dans un même plan vertical qui est décalé transversalement par rapport au plan vertical du capteur. Ils sont décalés entre eux selon la direction verticale et leurs longueurs sont telles que, selon la direction horizontale, les doigts se recouvrent au moins partiellement pour que leurs extrémités se trouvent en vis-à-vis l'une de l'autre selon la direction verticale. Ainsi, lorsque le capteur se déforme, le doigt 26 se déplace avec le montant d'interface 18, ce déplacement étant essentiellement vertical par rapport au doigt 24 qui est fixe puisque porté par le montant de base 16.

Dans l'exemple illustré, le doigt mobile 26 lié à au montant d'interface 18 est agencé au-dessus du doigt fixe 24 lié au montant de base 16.

A l'extrémité de l'un des doigts, en l'occurrence le doigt 26 lié au montant d'interface 18, on a fixé une tige filetée qui s'étend verticalement. Cette tige filetée est ici réalisée sous la forme d'une vis 36 qui est vissée au travers de l'extrémité du doigt 26 et qui est donc fixe par rapport à celui-ci. La tête de la vis 36 est en appui contre une face supérieure du doigt mobile 26 tandis que sa partie filetée s'étend en dessous du doigt 26 et au travers d'un alésage lisse 38 formé dans l'extrémité du doigt fixe 24. Lorsque le capteur se déforme, la partie filetée de la vis peut coulisser librement dans l'alésage 38 selon une direction sensiblement verticale si on néglige le mouvement horizontal induit par la cinématique du parallélogramme.

Sur la vis 36, on a monté deux séries 40, 42 de deux écrous dont l'une 40 se trouve au-dessus du doigt fixe 24 et l'autre 42 au-dessous. Dans chaque série, les deux écrous sont serrés l'un contre l'autre pour former un ensemble écrou/contre-écrou dont la position le long de la vis est figée. Chacune des deux séries 40, 42 d'écrous est donc susceptible de venir en appui contre le doigt fixe 24, respectivement contre les faces supérieure 44 et inférieure 46 de celui-ci qui forment ainsi des faces de butée. Bien entendu, le diamètre de l'alésage 38 est inférieur à celui des écrous 40, 42 pour que ceux-ci puissent faire fonction de faces de butée liées au doigt mobile 26.

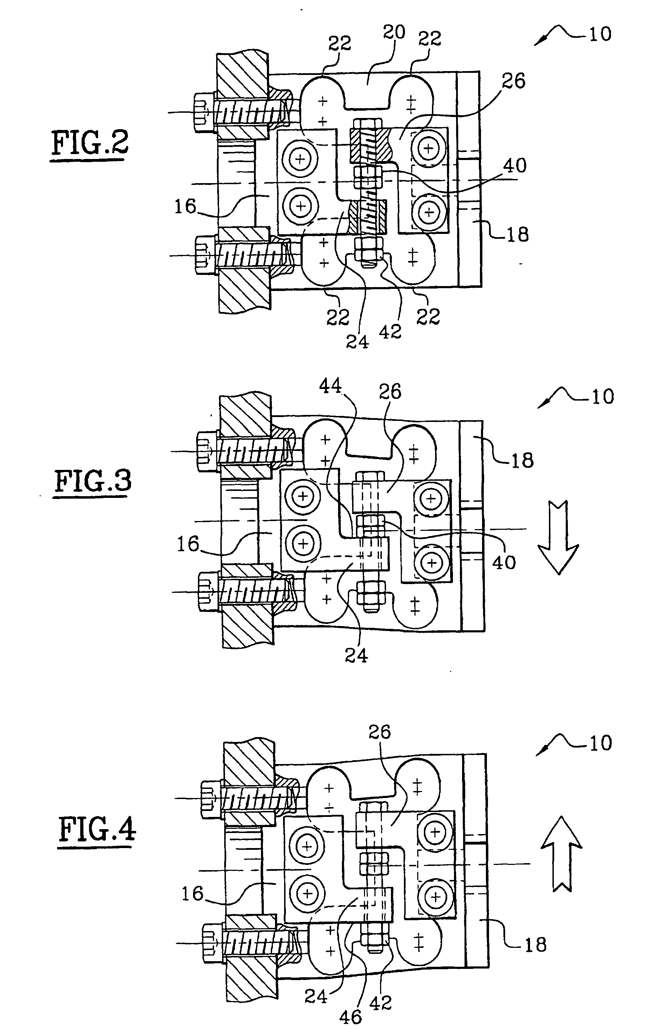

Comme on peut le voir sur la figure 2, les deux séries 40, 42 d'écrous sont positionnées sur la vis 36 de manière à ce que, en l'absence de toute charge sur le capteur, elles soient chacune écartées verticalement de leur face de butée 44, 46 correspondante. De la sorte, à partir de cette position, le capteur peut se déformer librement sous l'effet d'une charge appliquée vers le bas ou vers le haut. Les écartements des deux séries d'écrous avec leur face de butée correspondante peuvent être différents.

Comme on peut le voir sur les figures 3 et 4, sous l'effet d'une charge excessive vers le haut ou vers le bas, l'une des séries d'écrous vient en appui contre la face de butée correspondante du doigt 24. Une fois ainsi en appui, le doigt 26 empêche le montant d'interface 18 de se déplacer plus loin selon la direction de l'application de l'effort, fixant la limite de la déformation du capteur.

Bien entendu cette limite est ajustable par une simple modification de la position axiale d'une des série d'écrous sur la vis 36.

Le système de protection selon l'invention est particulièrement simple et efficace. Le fait d'utiliser des doigts de butée rapportés permet de conserver une grande liberté dans le dessin de l'évidement 14 qui détermine les caractéristiques de déformation du capteur. Cela permet aussi d'éviter des usinages complexes dans le corps du capteur, ces usinages pouvant être la source d'un taux important de rupture du capteur en cours de fabrication.

Par ailleurs, ce dispositif permet de limiter la déformation du capteur dans les deux sens d'application de l'effort.

## Revendications

1. Capteur d'effort à moment constant, du type constitué d'un quadrilatère déformable dans lequel deux montants opposés (16, 18) sont reliés par deux traverses sensiblement parallèles (20), et du type dans lequel, sous l'effet un effort appliqué, sur un montant (18), dans le plan du capteur et selon une direction sensiblement perpendiculaire aux traverses (20), les deux montants se déplacent l'un par rapport à l'autre sensiblement selon la direction de l'effort du fait de la déformation des zones de jonction (22) des traverses (20) avec les montants (16, 18),
**caractérisé en ce que** chaque montant (16, 18) porte un doigt de butée (24, 26) qui est rapporté sur une face latérale (32, 34) du capteur et qui s'étend selon la direction transversale des montants (16,18) en direction de l'autre montant de telle sorte que les extrémités libres des deux doigts s'étendent en vis-à-vis l'une de l'autre, et **en ce que** les doigts (24, 26) comportent des faces de butée respectives qui viennent en appui l'une contre l'autre lorsque le capteur est déformé d'une valeur prédéterminée dans un sens ou dans l'autre sous l'application d'un effort excessif.

2. Capteur selon la revendication 1, **caractérisé en ce que** l'écartement de deux faces de butée associées des deux doigts (24, 26) est réglable.

3. Capteur selon la revendication 2, **caractérisé en ce qu'**un premier (26) des doigts porte une tige filetée (36) qui est sensiblement parallèle à la direction de déplacement relatif des deux montants (16, 18) et qui est pourvue d'au moins deux écrous (40, 42) prévus pour coopérer respectivement avec deux faces opposées (44, 46) du second doigt (24).

4. Capteur selon la revendication 3, **caractérisé en ce que** la tige filetée (36) coulisse librement au travers d'un alésage (38) formé dans le second doigt (24), et **en ce que** les deux écrous (30, 32) sont disposés de part et d'autre du second doigt (24).

5. Capteur selon l'une quelconque des revendications précédentes, **caractérisé en ce que** un doigt de butée (24, 26) est formé par l'une des branches d'une équerre (28, 30) dont la seconde branche est fixée sur une face latérale (32, 34) du montant (16, 18) correspondant.

6. Capteur selon la revendication 5, **caractérisé en ce que** les équerres (28, 30) sont fixées sur les montants par des vis agencées perpendiculairement au plan du capteur.

## Claims

1. Constant-moment load sensor of the type consisting of a deformable quadrilateral in which two opposed uprights (16, 18) are connected by two roughly parallel crossmembers (20) and of the type in which, under the effect of a load applied, to an upright (18), in the plane of the sensor and in a direction roughly perpendicular to the crossmembers (20), the two uprights move one relative to the other in substantially the same direction as the load because of the deformation of the regions (22) where the crossmembers (20) join the uprights (16, 18),
**characterized in that** each upright (16, 18) bears a stop finger (24, 26) which is attached to a lateral face (32, 34) of the sensor and runs in the transverse direction of the uprights (16, 18) towards the other upright such that the free ends of the two fingers extend facing each other, and **in that** the fingers (24, 26) have respective stop faces that come to press against one another when the sensor is deformed by a predetermined amount in one direction or the other under the application of excessive load.

2. Sensor according to Claim 1, **characterized in that** the separation of two stop faces associated with the two fingers (24, 26) is adjustable.

3. Sensor according to Claim 2, **characterized in that** a first (26) of the fingers bears a threaded rod (36) which is roughly parallel to the direction of relative displacement of the two uprights (16, 18) and which is provided with at least two nuts (40, 42) whose purpose is to collaborate with two opposed faces (44, 46) respectively of the second finger (24).

4. Sensor according to Claim 3, **characterized in that** the threaded rod (36) slides freely through a bore (38) formed in the second finger (24), and **in that** the two nuts (30, 32) are arranged one on each side of the second finger (24).

5. Sensor according to any one of the preceding claims, **characterized in that** a stop finger (24, 26) is formed by one of the branches of an angle bracket (28, 30) the second branch of which is fixed to a lateral face (32, 34) of the corresponding upright (16, 18).

6. Sensor according to Claim 5, **characterized in that** the angle brackets (28, 30) are fixed to the uprights by screws arranged perpendicular to the plane of the sensor.

## Patentansprüche

1. Kraftaufnehmer mit konstantem Moment der Art, die aus einem verformbaren Viereck besteht, bei dem zwei gegenüberliegende Streben (16, 18) durch zwei im Wesentlichen parallele Querleisten (20) verbunden sind, und der Art, bei der sich die zwei Streben unter der Einwirkung einer Kraft, die an eine Strebe (18) in der Ebene des Aufnehmers und in einer zu den Querleisten (20) im Wesentlichen senkrechten Richtung angelegt wird, aufgrund der Verformung der Verbindungsbereiche (22) der Querleisten (20) mit den Streben (16, 18) im Wesentlichen in der Richtung der Kraft relativ zueinander verschieben,
**dadurch gekennzeichnet, dass** jede Strebe (16, 18) einen Anschlagfinger (24, 26) trägt, der an einer Seitenfläche (32, 34) des Aufnehmers angebracht ist und sich entlang der Querrichtung der Streben (16, 18) in Richtung zu der anderen Strebe erstreckt, so dass die freien Enden der zwei Finger sich gegenüber voneinander erstrecken und dass die Finger (24, 26) jeweilige Anschlagflächen umfassen, die aneinander zur Anlage kommen, wenn der Aufnehmer unter der Einwirkung einer übermäßigen Kraft um einen vorbestimmten Wert in einer oder der anderen Richtung deformiert wird.

2. Aufnehmer nach Anspruch 1, **dadurch gekennzeichnet, dass** der Abstand zweier mit den zwei Fingern (24, 36) verknüpfter Anschlagflächen einstellbar ist.

3. Aufnehmer nach Anspruch 2, **dadurch gekennzeichnet, dass** ein erster (26) der Finger eine mit einem Gewinde versehene Spindel (36) trägt, die im Wesentlichen parallel zu der relativen Bewegungsrichtung der zwei Streben (16, 18) liegt und die mit zumindest zwei Muttern (40, 42) versehen ist, die jeweils mit zwei gegenüberliegenden Flächen (44, 46) des zweiten Fingers (24) zusammenwirken sollen.

4. Aufnehmer nach Anspruch 3, **dadurch gekennzeichnet, dass** die mit einem Gewinde versehene Spindel (36) frei durch eine Bohrung (38) gleitet, die in dem zweiten Finger (24) ausgebildet ist, und dass die zwei Muttern (30, 32) auf der einen und der anderen Seite des zweiten Fingers (24) angeordnet sind.

5. Aufnehmer nach einem der vorhergehenden Ansprüche, **dadurch gekennzeichnet, dass** ein Anschlagfinger (24, 26) von einem der Arme eines Winkelstücks (28, 30) gebildet wird, dessen zweiter Arm an einer Seitenfläche (32, 34) der entsprechenden Strebe (16 18) befestigt ist.

6. Aufnehmer nach Anspruch 5, **dadurch gekennzeichnet, dass** die Winkelstücke (28, 30) an den Streben durch senkrecht zu der Ebene des Aufnehmers angeordneten Schrauben befestigt werden.
